# EUROPÄISCHE PATENTANMELDUNG

(11) **EP 4 825 719 A1**
(43) Veröffentlichungstag der Anmeldung: **21.10.2026**
(21) Anmeldenummer: 26400001.9
(22) Anmeldetag: 15.04.2026
(51) Int. Cl.: B62M 3/08, A43B 5/14

(54) **SCHUPLATTE FÜR EIN KLICKPEDALSYSTEM**

(30) Priorität: 15.04.2025 DE 102025001274
(71) Anmelder: Sill, Ullrich, 86911 Dießen am Ammersee (DE)
(72) Erfinder: Sill, Ullrich, 86911 Dießen am Ammersee (DE)

(57) **Zusammenfassung**

Die vorliegende Erfindung betrifft einen Cleat für ein Klickpedalsystem, der ein elastisches Inlay enthält. Das Inlay ist in einer Aufnahmevertiefung im Cleatkörper angeordnet und bleibt sowohl im eingeklickten als auch im ausgeklickten Zustand am Cleat. Im ausgeklickten Zustand bildet das Inlay wenigstens teilweise eine Auftrittsfläche für den Schuh beim Gehen. Diese Konstruktion verbessert den Komfort und die Sicherheit des Nutzers, indem sie eine bessere Traktion und Dämpfung bietet.

## Beschreibung

Die vorliegende Anmeldung bezieht sich allgemein auf ein Cleat für ein Klickpedalsystem mit elastischem Inlay zur Erhöhung des Gehkomforts und insbesondere auf die technischen Merkmale und Konstruktionen, die eine verbesserte Dämpfung und Unterstützung beim Gehen ermöglichen.

Ein solches Klickpedalsystem, auch bekannt als Klicksystem oder Clipless-Pedalsystem, ist meist Teil eines Fahrradpedals, das eine feste Verbindung zwischen dem Fahrradschuh des Fahrers und dem Pedal selbst herstellt. Dieses System verwendet eine Vorrichtung, die als "Cleat" oder Schuhplatte bekannt ist, welche meist an der Sohle des Fahrradschuhs befestigt wird. Der Cleat verbindet sich, insbesondere rastet er mechanisch in das Pedal ein, z.B. wenn der Fahrer den Fuß auf das Pedal drückt, und löst sich, z.B. wenn der Fahrer den Fuß in einer Lösebewegung, beispielsweise einer Drehung bewegt, um ihn zu entfernen. Ein eingeklickter Zustand liegt vor, wenn das Cleat über das Klick-Befestigungsmittel mit dem Klickpedal verrastet ist. Ein ausgeklickter Zustand liegt vor, wenn das Cleat vom Klickpedal gelöst ist.

Derzeit sind neben Shimano Systemen auch Klickpedalsysteme von anderen Herstellern, wie zum Beispiels Crankbrothers, Time, Look und das magnetische System Magped bekannt. All diese Systemen weisen einen Cleat auf, der die temporäre Kopplung von Schuh und Pedal erlaubt. Dieser Cleat kann unterschiedlich ausgebildet sein, er weißt aber grundsätzlich einen Cleatkörper mit einer unteren Oberfläche zum Eingriff mit einem Klickpedal und einer oberen Oberfläche zur Befestigung an einem Schuh auf. Zudem umfasst er ein Klick-Befestigungsmittel, insbesondere einer vorderen Rastnase und einer hinteren Rastnase bzw. eine oder mehrere entsprechend ausgebildeter insbesondere werkzeuglos und vor allem nur mit dem Fuß verriegelbarer Befestigungselemente, z.B. Rastnasen, Rastvertiefungen, Magnete etc auf, zur lösbaren Befestigung des Cleats und des daran befestigten Schuhs am Klickpedal. Der Cleat weist zudem wenigstens ein Cleat-Befestigungsteil auf, wobei das Cleat-Befestigungsteil wenigstens eine Befestigungsmittelaufnahme zur Aufnahme von Befestigungsmitteln zur Befestigung des Cleatkörpers am Schuh aufweist.

Dieser Cleat ist Grundlage der Erfindung.

Solche Pedalsysteme und insbesondere deren zugehörige Cleats und insbesondere deren aus Metall gefertigte Cleats weisen jedoch auch Nachteile auf. So sind die meist sehr harten und scharfkantigen Cleats häufig ein Grund für Beschädigungen von Böden, wenn die Benutzer mit ihren Fahrradschuhen über diese Böden laufen. Auch stellen diese Cleats ein Gefahrenpotential beim Laufen dar, da sie meist keinen sicheren Tritt erlauben. Das Laufen mit bekannten Cleats ist zudem unbequem. Auch die Verwendung von Fahrradschuhen mit Cleats bei Fahrrädern, die keine korrespondierenden Pedale aufweisen, ist problematisch, da kein sicherer Stand auf dem Pedal gewährleitet ist.

Daher befasst sich diese Anmeldung mit dem Problem, ein verbessertes Cleat für ein Klickpedalsystem bereitzustellen, das sowohl beim Radfahren als auch beim Gehen optimalen Komfort und Sicherheit bietet.

Das Problem wird u.a. gelöst durch ein Cleat für ein Klickpedalsystem, umfassend:
einen Cleatkörper mit einer unteren Oberfläche zum Eingriff mit einem Klickpedal, und
einer oberen Oberfläche zur Befestigung an einem Schuh, wobei der Cleatkörper ein Klick-Befestigungsmittel zur lösbaren Klick-Befestigung des Cleats und des daran befestigten Schuhs am Klickpedal aufweist, wobei ein eingeklickter Zustand vorliegt, wenn das Cleat über das Klick-Befestigungsmittel mit dem Klickpedal verrastet ist, und ein ausgeklickter Zustand vorliegt, wenn das Cleat vom Klickpedal gelöst ist, sowie wenigstens ein Cleat-Befestigungsteil mit wenigstens einer Befestigungsmittelaufnahme zur Aufnahme von Befestigungsmitteln zur Befestigung des Cleatkörpers am Schuh aufweist, wobei der Cleatkörper an seiner unteren Oberfläche eine Aufnahmevertiefung aufweist, in der ein separates Inlay angeordnet ist,
wobei das Inlay eine Trägerstruktur und eine darauf angeordnete elastische Schicht aufweist,
die Befestigungsmittelaufnahme zumindest teilweise überdeckt, im bestimmungsgemäßen Betrieb sowohl im eingeklickten als auch im ausgeklickten Zustand lösbar am Cleatkörper gehalten ist, und im ausgeklickten Zustand wenigstens teilweise eine Auftrittsfläche zum Gehen bildet, wobei das Inlay mittels eines Haltemechanismus lösbar in der Aufnahmevertiefung fixiert ist, der eine formschlüssige, kraftschlüssige und/oder magnetische Haltewirkung aufweist.

Der Haltemechanismus ist vorzugsweise derart ausgebildet, dass das Inlay mehrfach in die Aufnahmevertiefung eingesetzt und daraus entnommen werden kann, ohne dass eine Zerstörung des Inlays oder des Cleatkörpers erforderlich ist. Insbesondere ist der Haltemechanismus als wiederlösbare Verriegelung ausgeführt.

Grundlage ist ein Cleat für ein Klickpedalsystem, umfassend einen Cleatkörper mit einer unteren Oberfläche zum Eingriff mit einem Klickpedal und einer oberen Oberfläche zur Befestigung an einem Schuh, und mit einem Klick-Befestigungsmittel, insbesondere einer vorderen Rastnase und einer hinteren Rastnase, zur lösbaren Klick-Befestigung des Cleats und des daran befestigten Schuhs am Klickpedal, sowie mit wenigstens einem Cleat-Befestigungsteil, wobei das Cleat-Befestigungsteil wenigstens eine Befestigungsmittelaufnahme zur Aufnahme von Befestigungsmitteln zur Befestigung des Cleatkörpers am Schuh aufweist, und ein wenigstens teilweise elastisches Inlay, das insbesondere entfernbar insbesondere innerhalb einer Aufnahmevertiefung an der unteren Oberfläche des Cleatkörpers angeordnet ist, wobei das elastische Inlay derart insbesondere in der Aufnahmevertiefung an der unteren Oberfläche aufgenommen ist, das es im eingeklickten Zustand und im ausgeklickten Zustand am Cleat verbleibt und im ausgeklickten Zustand wenigstens teilweise eine Auftrittsfläche für den Schuh beim Gehen bildet.

Das Inlay bleibt sowohl im eingeklickten als auch im ausgeklickten Zustand am Cleat befestigt und ermöglicht dem Benutzer ein komfortables Gehen, optional ohne, dass der das Inlay tragende Cleatkörper den Boden berührt bzw. optional derart, dass der Kontakt des den Inlay tragenden Cleatkörpers im Vergleich zu aus dem Stand der Technik bekannten Cleatkörpern reduziert ist. Vorzugsweise übernimmt das Inlay den Bodenkontakt. Zu Lastabtragung insbesondere beim Gehen, aber auch optional beim Radfahren, werden die Kräfte vom Inlay auf die Aufnahmevertiefung weitergeleitet.

Das erfindungsgemäße Cleat verbessert zudem den Schutz von Böden/Untergründen und auch den Schutz von Pedalen, die keinen Klickmechanismus haben (z.B. Flatpedals und v.a. Kombipedale, die auf der einen Seite ein Klicksystem, vorzugsweise passend zum erfindungsgemäßen Cleat und auf der anderen Seite kein Klicksystem aufweisen). Die Oberfläche des Pedals wird durch das elastische Inlay geschont. Bei meinem Kombipedal mit der dauerhaften Nutzung des Standard-Cleats ist die Eloxalschicht nach kurzer Zeit verkratzt, was zu Korrosion führt.

Ein weiterer Effekt ist, dass, vor allem bei der Nutzung von Kombipedalen oder auch Flatpedals mit Klick-Schuhen die Standsicherheit auf der Nicht-Klick-Seite durch das elastische Inlay deutlich erhöht ist. Auch ist das nicht eingeklickte Fahren mit dem erfindungsgemäßen Cleat sicherer, da eine besser Stand und vor allem Rutschsicherheit gewährleistet wird.

Vorzugsweise ist das Cleat im Bereich der Auftrittsfläche am Vorderfuß des Schuhs angeordnet.

In einer Ausführungsform weist die Aufnahmevertiefung einen wenigstens teilweise umlaufenden, insbesondere vollständig umlaufenden Schutzrand auf. Dieser Schutzrand kann optional derart ausgebildet sein, dass es den Sitz des Inlays im Cleat verbessern. Es kann optional derart ausgebildet sein, das es horizontale Belastungen wenigstens teilweise abfängt, um so das Inlay gegen Beschädigungen zu schützt. Der Schutzrand ist optional im vorderen Bereich und im hinteren Bereich des Cleat ausgebildet. Seitlich ist optional kein Schutzrand vorgesehen.

Optional erstreckt sich die durch das Inlay gebildete Auftrittsfläche des in die Aufnahmevertiefung eingesetzten Inlays im wesentlichen oberflächenbündig mit diesem Schutzrand, optional maximal 3 mm unterhalb dieses Schutzrandes und / oder maximal 3 mm oberhalb dieses Schutzrandes erstreckt . Vorzugsweise ragt das Inlay um maximal 3 mm über den restlichen Cleatkörper und insbesondere über einen optional vorgesehenen Schutzrad aus der unteren Oberfläche hervor.

Eine mögliche Ausführungsform weist eine ca. 1.5 - 2.1, insbesondere 1,8 mm starke Gummierung auf einer 1,0 - 1,4 mmm, insbesondere 1,2 mm starken Trägerplatte auf. Somit ist das Inlay insgesamt optional 2,5 - 3.5 mmm, insbesondere 3 mm stark. Die Materialstärke am Cleatkörper, die die Kraft einer Befestigung, insbesondere Verschraubung des Cleats am Schuh aufnimmt, ist von 5mm (beispielsweise bei einem original Shimano Cleat) optional auf 2,1 - 2,7 mm, insbesondere 2,4 mm reduziert worden.

Dieser Bereich wurde durch das Hinzufügen des Inlays um optional zwischen 2,3 und 2, 9 mm, insbesondere 2,6mm geschwächt.

Zudem definiert der Schutzrand optional einen Lagersitz, so dass das Inlay sicher positioniert ist. Die im wesentlichen oberflächenbündige Anordnung des Inlays mit dem Schutzrand gewährleistet eine gleichmäßige Kraftverteilung beim Auftreten und verhindert Stolpergefahren, die durch herausstehende Teile entstehen könnten. Die optionale Positionierung des Inlays maximal 3 mm unterhalb und/oder maximal 6mm, weiter optional maximal 3mm oberhalb des Schutzrandes ermöglicht eine individuelle Anpassung an unterschiedliche Schuhsohlenprofile und gewährleistet eine optimale Funktionalität des Cleatsystems.

Optional steht das Inlay nicht über die angrenzenden Bereiche der Hauptschuhsohle hinaus. Es ist optional also so angeordnet, dass eine das Inlay umgebende Schuhsohle bzw. ein Schuhsohlenprofil abschnittsweise genauso und/oder weiter aus der unteren Oberfläche vorsteht als das Cleat. Optional soll verhindert werden, dass das Cleat und sein Inlay die Hauptlast beim Gehen abträgt. Optional sind die Aufstandsfläche des Inlays und der Schuhsohle, insbesondere im Vorfußbereich auf einem gleichen Niveau angeordnet, optional liegt das Inlay abschnittsweise, weiter optional überall etwas, insbesondere um 1mm - 5 mm tiefer.

Es ist denkbar Anpassmittel, beispielsweise dünne Unterleger vorzusehen, die optional in die Aufnahmevertiefung und/oder zwischen Schuh und Cleat eingefügt insbesondere gelegt werden können, um so eine Niveauanpassung zwischen insbesondere umgebender Schuhsohle und Inlay zu erlauben.

In einer Ausführungsform ist der Cleat dadurch gekennzeichnet, dass der Schutzrand wenigstens abschnittsweise entlang des Außenumfanges des Cleats verläuft. Dies trägt zur Stabilisierung des gesamten Cleats bei und schützt die Kanten vor Beschädigungen durch seitliche Stöße oder Abrieb. Durch die Anordnung des Schutzrandes am Außenumfang wird das Eindringen von Schmutz und kleinen Steinen in die Aufnahmevertiefung verhindert, was die Funktionalität des Cleatsystems auch unter widrigen Bedingungen aufrechterhält. Bei einer Ausführungsform werden durch das Inlay auch Teile der Befestigungsmittel zur Befestigung des Cleatkörpers am Schuh, beispielsweise Schraubenköpfe geschützt. Diese sind im Stand der Technik oft mit Dreck zugesetzt und durch Steinkontakte beschädigt). Die Präsenz des Schutzrandes entlang des Außenumfanges erleichtert das korrekte Einsetzen des Inlays in die Aufnahmevertiefung und unterstützt den Benutzer bei der schnellen und einfachen Wartung des Cleats.

Es ist denkbar, dass die Aufnahmevertiefung einen wenigstens teilweise umlaufenden Schutzrand, wobei die durch die elastische Schicht des Inlays gebildete Auftrittsfläche des in die Aufnahmevertiefung eingesetzten Inlays sich im wesentlichen oberflächenbündig mit diesem Schutzrand erstreckt, optional maximal 3 mm unterhalb dieses Schutzrandes und/oder
maximal 6 mm, weiter optional maximal 3mm oberhalb dieses Schutzrandes erstreckt, wobei optional der Schutzrand wenigstens abschnittsweise entlang des Außenumfanges des Cleats verläuft.

In einer Ausführungsform ist das Cleat dadurch gekennzeichnet, dass die Aufnahmevertiefung eine Tiefe von bis zu 6 mm, optional bis zu 4mm, weiter optional bis zu 3mm aufweist. Die Festlegung einer Tiefe von bis zu 6 mm, optional bis zu 4mm, weiter optional bis zu 3mm für die Aufnahmevertiefung gewährleistet, dass das elastische Inlay ausreichend Platz findet, ohne die Gesamthöhe des Cleats zu erhöhen, und so die Funktionalität der Klicksysteme garantiert. Eine definierte Tiefe der Aufnahmevertiefung ermöglicht eine präzise Herstellung und Passform des Inlays, was zu einer verbesserten Haltbarkeit und Leistung des Cleatsystems führt. Durch die Spezifikation der Tiefe kann das Inlay so konzipiert werden, dass es die mechanischen Eigenschaften des Cleatkörpers ergänzt, indem es beispielsweise Vibrationen absorbiert und somit den Tragekomfort erhöht.

Wie eingangs beschrieben weist das Inlay eine Trägerstruktur und eine darauf angeordnete elastische Schicht auf. Optional kann das Inlay mehrschichtig hergestellt sein bzw. als Mehrschichtkonstruktion ausgebildet sein. So ist es denkbar das Inlay aus wenigstens zwei Schichten mit optional unterschiedlichen Materialeigenschaften, beispielsweise einer weicheren und einer härteren Schicht auszubilden. Es kann optional eine vorzugsweise starre Trägerplatte und wenigstens eine daran befestigte vorzugsweise elastische Schicht hier auch als Dämpfungsschicht bezeichnet aufweisen. Die elastische Schicht kann als Schicht zur Verbesserung der Dämpfung, alternativ oder in Ergänzung aber auch zur Verbesserung der Reibung, also als Traktionsschicht dienen, um so beispielsweise die Trittfestigkeit des Fahrradfahrers im Gelände und/oder im nicht eingeklickten Zustand auf dem Pedal zu verbessern. Auch das ist unter dem Begriff elastische Schicht subsummiert.

Die elastische Schicht kann insbesondere aus einem Material, das aus der Gruppe ausgewählt ist, die aus Gummi, Silikon und thermoplastischen Elastomeren besteht, hergestellt sein. Auch ist einer Herstellung aus insbesondere gedrucktem TPU, aber auch aus Kautschuk möglich.

Optional bildet die elastische Schicht wenigstens teilweise, optional hauptsächlich die Auftrittsfläche.

Die elastische Schicht kann auf der Trägerplatte aufgeklebt, vulkanisiert oder dergleichen unlösbar befestigt insbesondere vergossen, gedruckt oder verklebt sein.

Das Inlay kann auch mittels additiver Fertigung (z.B. FDM-Druck) hergestellt werden, beispielsweise mit einer Trägerplatte aus PLA, auf die TPU als elastische Schicht direkt aufgedruckt wird.

Es ist denkbar, die Trägerplatte aus einem steiferen und/oder widerstandsfähigeren Material herzustellen als die elastische Schicht. Die Trägerplatte kann u.a. aus Metall oder dergleichen stabilen und widerstandsfähigen Material hergestellt sein.

Der Cleatkörper kann aus verschiedenen metallischen Werkstoffen bestehen, wie etwa kaltgeschmiedetem, wärmebehandeltem Stahl, Messing, Titan oder auch additiv gefertigtem Stahl oder Kunststoffen, z.B. Warmbaustahl im Lasersinterverfahren, sowie aus unterschiedlichsten Kunststoffen, Gewebekunststoffen oder dergleichen widerstandsfähigen Materialien. Die Auswahl des Werkstoffs beeinflusst insbesondere die Belastbarkeit und das Gewicht des Cleatsystems.

Sind Rastnasen oder dergleichen Befestigungsmittel vorgesehen, die sich insbesondere gegen Rastnasenaufnahmen verspannen, um das Cleat am Pedal zu fixieren und in Position zu halten, sind diese vorzugsweise aus Metall oder einem dergleichen widerstandsfähigen ausgebildet, um eine dauerhafte mechanische Verriegelung mit dem Klickpedal zu gewährleisten und insbesondere die erforderlichen Auslösekräfte auch bei langfristiger Nutzung sicherzustellen.

Das Inlay ist erfindungsgemäß lösbar in der Aufnahmevertiefung im Cleat befestigt. Hierzu können unterschiedliche lösbare Verbindungsmittel verwendet werden. Beispielsweise kann das Inlay mittels mechanischer Verbindungselemente wie Schraubverbindungen, Rastverbindungen oder Klemmverbindungen in einer entsprechend gestalteten Aufnahmevertiefung gehalten werden.

Dabei kann die Aufnahmevertiefung ein Arretierungsmittel aufweisen, das mit einem korrespondierenden Arretierungsgegenmittel am Inlay zusammenwirkt, um dieses sicher und zugleich lösbar in der Aufnahmevertiefung zu fixieren.

Alternativ oder ergänzend kann die lösbare Befestigung durch ein Lippen- oder Kantenmittel an der Aufnahmevertiefung erfolgen, das mit einem entsprechenden Gegenmittel am Inlay kooperiert. Diese Ausgestaltung ermöglicht optional eine formschlüssige Fixierung des Inlays durch Einclipsen oder Einrasten etc.

Darüber hinaus können weitere Verbindungssysteme eingesetzt werden, wie etwa Schienensysteme, beispielsweise in Form von Nut-und-Feder-Verbindungen, sofern diese eine sichere Halterung des Inlays im eingeklickten wie auch im ausgeklickten Zustand gewährleisten und gleichzeitig einen Austausch des Inlays erlauben

In einer Ausführungsform ist der Cleat dadurch gekennzeichnet, dass das Inlay austauschbar am Cleat angeordnet ist, wobei die Aufnahmevertiefung ein Lippen- oder Kantenmittel beinhaltet, das mit einem entsprechenden Lippen- oder Kantengegenmittel am Inlay zusammenwirkt, um das Inlay in der Aufnahmevertiefung zu halten und/oder die Aufnahmevertiefung ein Arretierungsmittel insbesondere wenigstens ein Schraubmittel insbes, wenigstens eine Schraube aufweist, das mit einem entsprechenden Arretierungsgegenmittel insbes. Schraubenaufnahme am Inlay zusammenwirkt, um das Inlay in der Aufnahmevertiefung zu halten. Eine Kombination aus Lippen- oder Kantenmittel und Arretierungsmitteln ist denkbar. So kann z.B. das Inlay auf einer Seite z.B. wenigstens ein Haltelement wie bspw. eine Rastnase aufweisen, mit der es in eine Gegen-Rastnase, beispielsweise eine Nut am Cleatkörper bzw. in der Aufnahmevertiefung einrasten kann und diese insbesondere hintergreifen kann, und beispielsweise auf der gegenüberliegenden Seite z.B. eine Schraubenaufnahme aufweisen, über die es, z.B. mit einer Madenschraube am Cleatkörper verschraubt werden kann.

Im Unterschied zu rein mechanischen Verbindungslösungen kann das Inlay auch mittels einer Klebe- oder dergleich wirkenden Verbindung lösbar befestigt sein, sofern die Verbindung beispielsweise thermisch oder chemisch reversibel ausgeführt ist. Auf diese Weise kann das Inlay bei Bedarf ebenfalls entfernt oder ausgetauscht werden, ohne die Funktion oder Integrität des Cleats dauerhaft zu beeinträchtigen.

In einer Ausführungsform ist der Cleat dadurch gekennzeichnet, dass das Inlay weniger als 10 mm, optional maximal 6 mm dick ist. Die Festlegung einer Dicke des Inlays von optional mehr als 1,6 mm, vorzugsweise zwischen 1,6 und 2,0 mm, weiter optional von 1,8mm stellt sicher, dass das Inlay ausreichend Substanz besitzt, um die notwendige Haltbarkeit und Traktion zu bieten, ohne unnötig zu beschweren. Durch die Option, die Dicke des Inlays auf mehr als 3 mm zu erhöhen, kann die Stoßdämpfung verbessert werden, was den Tragekomfort weiter steigert und die Ermüdung des Benutzers reduziert.

Die elastische Schicht kann eine Dicke im Bereich von etwa 1 mm bis 4 mm, insbesondere zwischen 1,4 mm und 2,8 mm aufweisen. Die Trägerstruktur, insbesondere eine Trägerplatte, kann eine Dicke im Bereich von etwa 0,6 mm bis 2 mm, insbesondere zwischen 0,8 mm und 1,8 mm aufweisen.

In einer Ausführungsform weist das Inlay eine Texturierung insbesondere auf ihrer vom Cleat wegweisenden, die Auftrittsfläche bildenden Oberfläche auf, insbesondere um Traktion und/oder Dämpfung insbesondere beim Gehen zu erhöhen. Vorzugsweise ist diese auf der vom Cleat weg weisenden, die Auftrittsfläche bildenden Oberfläche der elastischen Schicht angeordnet.

In einer Ausführungsform ist der Cleat dadurch gekennzeichnet, dass das Inlay im eingesetzten Zustand wenigstens 70%, weiter optional wenigstens 80%, und weiter optional wenigstens 90% der unteren Oberfläche des Cleatkörpers bedeckt, weiter optional im Wesentlichen die gesamte untere Oberfläche bedeckt, mit Ausnahme eines die Aufnahmevertiefung wenigstens teilweise umlaufenden Schutzrandes und/oder des Klick-Befestigungsmittels, und weiter optional maximal 95%, weiter optional maximal 85% der unteren Oberfläche des Cleatkörpers bedeckt.

In einer Ausführungsform erstreckt sich das Inlay einteilig über einen Großteil der unteren Oberfläche des Cleatkörpers, insbesondere über wenigstens 70 %, vorzugsweise wenigstens 80 % und besonders bevorzugt bis zu 95 % der Gesamtfläche. Hierdurch wird eine großflächige Auftrittsfläche bereitgestellt.

Die durch die elastische Schicht gebildete Auftrittsfläche kann im eingesetzten Zustand im Wesentlichen bündig mit einer umgebenden Oberfläche des Cleatkörpers verlaufen oder relativ dazu leicht vertieft oder erhaben angeordnet sein.

Optional ist das Inlay derart in der Aufnahmevertiefung anordbar und/oder die Aufnahmevertiefung derart ausgebildet, dass das Inlay die Befestigungsmittelaufnahme abdeckt und wenigstens ein zur Verbindung von Schuh und Cleatkörper vorgesehenes Befestigungsmittel schützt.

Das Inlay ist mittels eines Haltemechanismus lösbar in der Aufnahmevertiefung fixiert. Der Haltemechanismus kann eine formschlüssige, kraftschlüssige und/oder magnetische Haltewirkung aufweisen. Hierdurch wird verdeutlicht, dass die lösbare Halterung nicht auf eine bestimmte Befestigungsart beschränkt ist. Vielmehr können unterschiedliche oder kombinierte Halteprinzipien vorgesehen sein.

In einer Ausführungsform umfasst der Haltemechanismus ein Lippen- oder Kantenmittel in der Aufnahmevertiefung und ein komplementäres Lippen- oder Kantengegenmittel am Inlay, oder umgekehrt. Die komplementären Mittel können beim Einsetzen des Inlays miteinander zusammenwirken, um das Inlay in der Aufnahmevertiefung zu halten. Die Halterung kann insbesondere durch Einclipsen, Einrasten, Hintergreifen, Einschieben, Verklemmen oder durch eine Kombination solcher Wirkprinzipien erfolgen. Ebenso sind Schienen-, Nut-Feder- oder sonstige Führungs- und Haltestrukturen möglich.

In weiteren Ausführungsformen weist das Inlay wenigstens ein Halteelement auf, das mit einer Nut oder einer vergleichbaren Hinterschneidungsstruktur der Aufnahmevertiefung zusammenwirkt. Dabei kann wenigstens ein Halteelement als federelastisches Halteelement und/oder wenigstens ein weiteres Halteelement als starres Halteelement ausgebildet sein. Beispielsweise können in einem vorderen und einem hinteren Bereich der Aufnahmevertiefung gegenüberliegende Nuten vorgesehen sein, in die ein starres Halteelement einerseits und ein federelastisches Halteelement andererseits lösbar eingreifen. Eine solche Anordnung kann eine definierte Montage- und Demontagebewegung des Inlays ermöglichen.

Das federelastische Halteelement kann durch wenigstens einen in der Trägerstruktur des Inlays ausgebildeten Schlitz gebildet oder mitgebildet sein. Der wenigstens eine Schlitz kann eine elastische Verformung des Halteelements ermöglichen, insbesondere ein elastisches Verschieben in der Ebene der Trägerstruktur. Auf diese Weise können voneinander durch den Schlitz getrennte Bereiche der Trägerstruktur relativ zueinander elastisch bewegt werden, so dass das Halteelement beim Einsetzen des Inlays elastisch ausweicht und anschließend in eine Nut oder vergleichbare Haltestruktur einrastet. Beim Lösen des Inlays kann das Halteelement in umgekehrter Weise elastisch ausgelenkt und aus der Nut herausbewegt werden. Es können ein oder mehrere Schlitze vorgesehen sein. Diese können sich im Wesentlichen parallel zueinander, symmetrisch oder asymmetrisch zu einer Haupterstreckungsachse des Halteelements und gegebenenfalls in einem Fischgrätenmuster anordnen.

Das federelastische Halteelement kann aus Federstahl oder aus einem anderen elastisch verformbaren Material bestehen, das nach einer elastischen Verformung infolge einer Krafteinwirkung wieder in seine Ausgangsform zurückkehrt. Alternativ kann das Halteelement integraler Bestandteil der Trägerstruktur sein und aus dem gleichen Material wie diese gebildet sein.

Weiter kann vorgesehen sein, dass eine Werkzeugangriffsfläche ausgebildet ist, mittels der das Inlay verriegelt und/oder entriegelt werden kann. Die Werkzeugangriffsfläche kann insbesondere so ausgestaltet sein, dass ein federelastisches Halteelement mit einem Hebelwerkzeug elastisch verformt und dadurch in eine Nut eingerastet oder aus dieser gelöst werden kann. Die Werkzeugangriffsfläche kann an der Trägerstruktur, an einem Halteelement und/oder in einem zwischen Halteelementen angeordneten Bereich vorgesehen sein.

Alternativ oder ergänzend kann der Haltemechanismus eine Magnetanordnung umfassen. Hierzu kann wenigstens ein Magnet in der Aufnahmevertiefung des Cleatkörpers angeordnet sein, der mit einem magnetischen Element des Inlays zusammenwirkt.

Das magnetische Element kann Teil der Trägerstruktur sein oder an dieser befestigt sein. Es können auch mehrere Magnetanordnungen vorgesehen sein, beispielsweise im vorderen und hinteren Bereich der Aufnahmevertiefung.

In Ausführungsformen kann die Magnetanordnung so ausgelegt sein, dass das Inlay selbsttätig, optional per Magnetkraft, in eine definierte Lage innerhalb der Aufnahmevertiefung verschoben wird. Hierzu können die Aufnahmevertiefung und/oder das Inlay Führungsflächen aufweisen, die das Inlay beim magnetisch unterstützten Verschieben in eine klemmende und/oder lagegesicherte Position bewegen.

Magnetische und mechanische Haltemittel können auch miteinander kombiniert sein. Auch bei dieser Ausführungsform kann eine Werkzeugangriffsfläche wie sie oben definiert ist vorgesehen sein.

In einer weiteren Ausführungsform kann der wenigstens eine Magnet entweder im Cleatkörper oder im Inlay angeordnet sein. Alternativ kann das Inlay selbst zumindest teilweise aus einem magnetischen oder magnetisierbaren Material bestehen, sodass keine separaten Magnetelemente erforderlich sind.

Vorliegende Erfindung betrifft auch ein Klickpedalsystem mit einem Cleat wie er hierin beschrieben ist und einem Klickpedalsystem zur Aufnahme und insbesondere Klick-Befestigung dieses Cleats. Aus Redundanzgründen wird in Bezug auf ein solches Klickpedalsystem auf alles, was in Bezug auf das erfindungsgemäße Cleat genannt wurde, verwiesen.

Weitere Ausführungsformen ergeben sich aus den Unteransprüchen. Im Folgenden wird die Erfindung anhand von Ausführungsformen beschrieben, die in den beiliegenden Zeichnungen näher erläutert sind.
Fig. 1 zeigt eine isometrische Darstellung einer Ausführungsform eines erfindungsgemäßen Cleatkörpers eines Cleats, in das ein elastisches Inlay eingesetzt werden kann;
Fig. 2 zeigt eine Draufsicht auf den Cleatkörper gemäß Fig. 1;
Fig. 3 zeigt eine weitere isometrische Darstellung des Cleatkörpers gemäß Fig. 1;
Fig. 4 zeigt eine isometrische Darstellung eines Inlays, das in den Cleatkörper gemäß Fig. 1 eingesetzt werden kann;
Fig. 5 zeigt eine Draufsicht auf das Inlay gemäß Fig. 4;
Fig. 6 zeigt eine weitere isometrische Darstellung des Inlays gemäß Fig. 4;
Fig. 7 zeigt eine isometrische Darstellung einer Ausführungsform des erfindungsgemäßen Cleats mit einem Cleatkörper gemäß Fig. 1 und einem Inlay gemäß Fig. 4;
Fig. 8 zeigt eine Draufsicht auf das Cleat gemäß Fig. 7;
Fig. 9 zeigt eine weitere isometrische Darstellung des Cleats gemäß Fig. 7;
Fig. 10 zeigt einen Querschnitt durch den Cleatkörper gemäß Fig. 1 gemäß der in Fig. 2 eingezeichneten Schnittführung IV - IV;
Fig. 11 zeigt einen Querschnitt durch den Cleat gemäß Fig. 7 gemäß der in Fig. 2 eingezeichneten Schnittführung IV - IV.
Fig. 12 zeigt eine Zusammenstellung unterschiedlicher isometrischer Darstellungen sowie eine Detaildarstellung einer Ausführungsform eines erfindungsgemäßen Cleats mit einem Inlay, das mittels wenigstens eines federelastischen Halteelements lösbar in einer Aufnahmevertiefung gehalten ist;
Fig. 13 zeigt eine Zusammenstellung unterschiedlicher Ansichten eines Inlays zur Verwendung in dem Cleat gemäß Fig. 12, insbesondere eine Draufsicht, eine Untersicht und eine isometrische Darstellung;
Fig. 14 zeigt einen Querschnitt durch das Cleat der Ausführungsform gemäß Fig. 12;
Fig. 15 zeigt eine Unteransicht des Cleats gemäß Fig. 12;
Fig. 16 zeigt eine Seitenansicht einer weiteren Ausführungsform eines erfindungsgemäßen Cleats mit einer Magnetanordnung zur lösbaren Halterung eines Inlays;
Fig. 17 zeigt einen Schnitt durch das Cleat gemäß Fig. 16;
Fig. 18 zeigt einen weiteren Schnitt durch das Cleat gemäß Fig. 16;
Fig. 19 zeigt eine Draufsicht auf das Cleat gemäß Fig. 16;
Fig. 20 zeigt eine Unteransicht des Cleats gemäß Fig. 16;
Fig. 21 zeigt eine Zusammenstellung mehrerer Darstellungen eines Inlays zur Verwendung mit dem Cleat gemäß Fig. 16, insbesondere isometrische Darstellungen und Schnittdarstellungen; und
Fig. 22 zeigt eine Zusammenstellung mehrerer Darstellungen des Cleatkörpers inkl. Befestigungsmittel zur Verwendung mit dem Cleat gemäß Fig. 16, insbesondere isometrische Darstellungen.

Im Folgenden werden für gleiche und gleich wirkende Bauteile dieselben Bezugsziffrn verwendet, wobei zur Unterscheidung bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger, aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

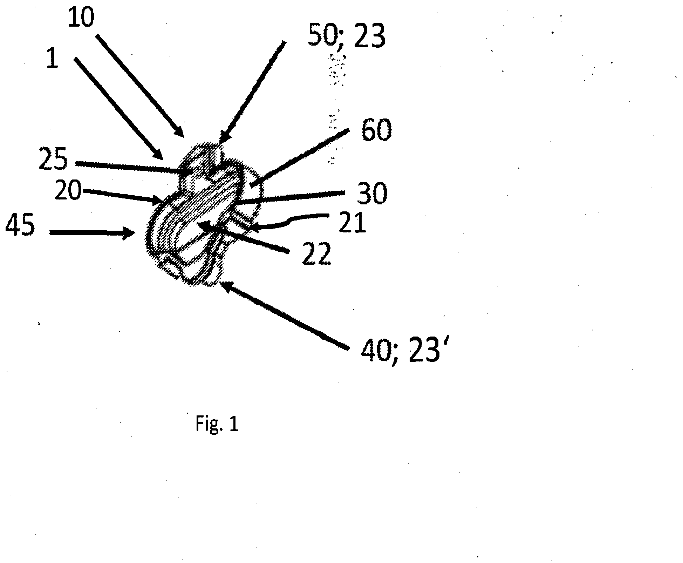

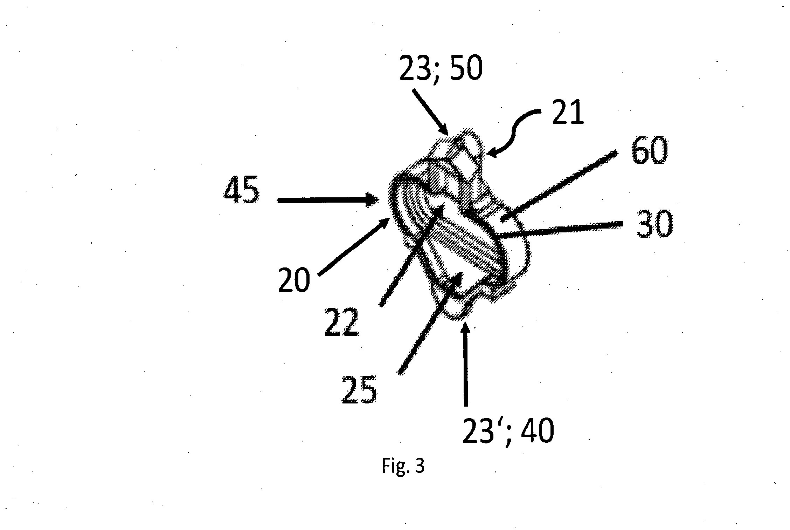

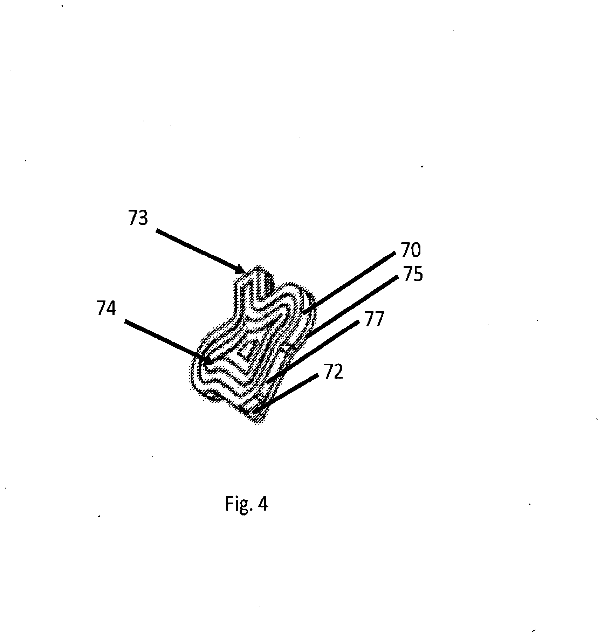

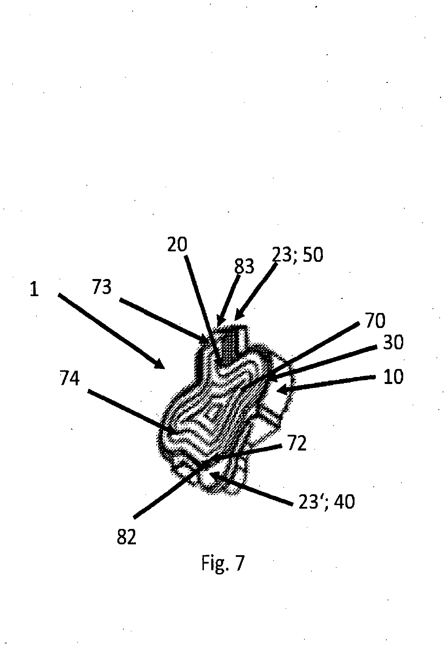

Die Figs. 1 - 3 zeigen eine isometrische Darstellung einer Ausführungsform eines erfindungsgemäßen Cleatkörpers eines Cleats 1 (siehe Fig. 7 -9), in das ein elastisches Inlay 70 (siehe Fig. 4 - 6) eingesetzt werden kann.

Dargestellt ist in den Figs. 1-11 ein Cleat 1 für ein Klickpedalsystem, umfassend:
einen Cleatkörper 10 mit einer unteren Oberfläche 20 zum Eingriff mit einem Klickpedal 90 und einer mit oberen Oberfläche 21 zur Befestigung an einem Schuh 80, und mit einem Klick-Befestigungsmittel,
insbesondere einer vorderen Rastnase 40 und einer hinteren Rastnase 50, zur lösbaren Klick-Befestigung des Cleats 1 und des daran befestigten Schuhs 80 am Klickpedal 90, sowie mit einem Cleat-Befestigungsteil 60, wobei das Cleat-Befestigungsteil 60 wenigstens eine Befestigungsmittelaufnahme 22 zur Aufnahme von Befestigungsmitteln 23 zur Befestigung des Cleatkörpers am Schuh 80 aufweist, und ein elastisches Inlay 70, das entfernbar an der unteren Oberfläche 20 des Cleatkörpers, und
insbesondere innerhalb einer Aufnahmevertiefung 25 an der unteren Oberfläche 20 angeordnet ist, und
wobei das elastische Inlay 70 derart in der Aufnahmevertiefung 25 aufgenommen ist, dass es im eingeklickten Zustand und im ausgeklickten Zustand am Cleat 1 verbleibt und im ausgeklickten Zustand wenigstens teilweise eine Auftrittsfläche 74 für den Schuh 80 beim Gehen bildet.

In Fig. 1 ist ein dreidimensionales Bild eines Cleats 1 für ein Klickpedalsystem dargestellt. Der abgebildete Cleatkörper 10 zeigt zwei mögliche Merkmale für die Klick-Befestigung, die vordere Rastnase 40 und die hintere Rastnase 50, welche zur Verbindung des Cleats 1 mit dem Klickpedal 90 dienen. Hier sind auch andere Befestigungsmittel für eine solche Klick-Befestigung, wie sie aus dem Stand der Technik bekannt sind, vorsehbar.

Der Cleatkörper 10 umfasst optional eine Aufnahmevertiefung 25, die am unteren Teil des Cleatkörpers zu finden ist. Das Cleat-Befestigungsteil 60 ist in der Abbildung sichtbar. Es weist eine Befestigungsmittelaufnahme 22 auf, die zur Aufnahme der Befestigungsmittel 23 zur Befestigung des Cleatkörpers am Schuh 80 verwendet wird. Ein Schutzrand 30 begrenzt optional die Aufnahmevertiefung 25 und bietet Schutz für das darin befindliche Inlay 70 (siehe u.a. Fig. 4 und 7).

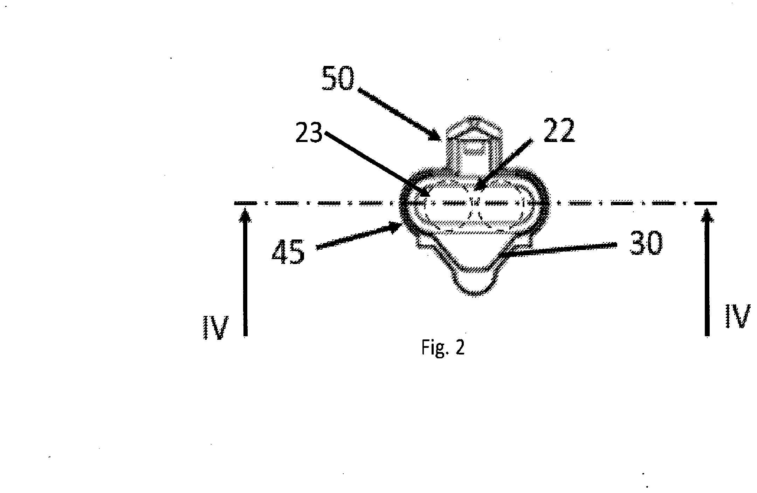

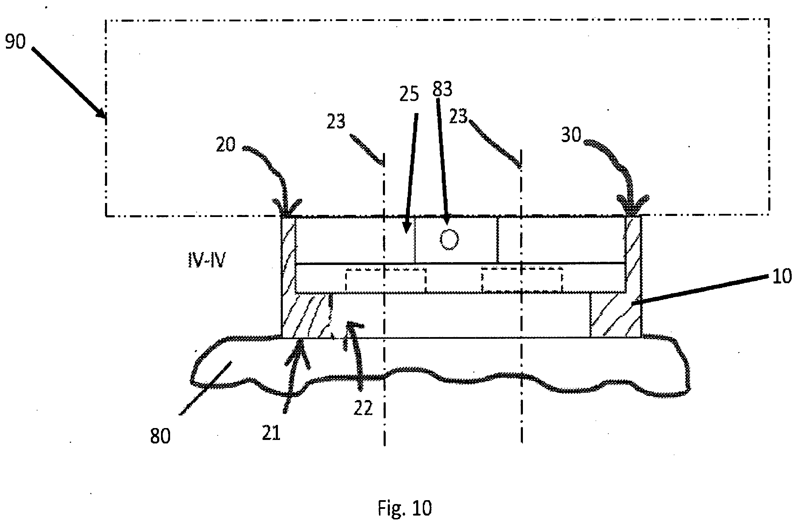

Fig. 2 zeigt eine Draufsicht auf den Cleatkörper 10 gemäß Fig. 1. In der gezeigten Darstellung ist der Cleatkörper 10 des Cleats 1 von oben sichtbar. Die hintere Rastnase 50 ragt oben aus dem Cleatkörper 10 hervor und ist eines der Elemente, die für die Klick-Befestigung an einem Klickpedal 90 verwendet werden. Die Befestigungsmittelaufnahme 22 ist optional zentral positioniert und dafür vorgesehen, Befestigungsmittel 23, beispielsweise Schrauben (gestrichelt dargestellt) aufzunehmen, die den Cleatkörper 10 am Schuh 80 befestigen. Der Schutzrand 30 umgibt die Befestigungsmittelaufnahme 22 und ist so konzipiert, dass er in der Aufnahmevertiefung 25 ein elastisches Inlay 70 aufnehmen kann, welches im ausgeklickten Zustand als Auftrittsfläche 74 dient. Die Schnittlinie IV-IV verweist auf Fig. 10 in der eine geschnittene Darstellung des Cleatkörpers dargestellt ist.

In den Darstellungen gemäß Figs. 1 bis 3 ist Teil eines Cleats 1 abgebildet, der Bestandteil eines Klickpedalsystems ist. Dieser Cleat 1 besteht aus einem Cleatkörper 10, der zur Montage an einem Schuh 80 und zur Verbindung mit einem Klickpedal 90 dient. Der Cleatkörper 10 zeigt die Aufnahmevertiefung 25, die für das Einsetzen eines elastischen Inlays 70 vorgesehen ist, welches jedoch in diesen Darstellung noch nicht sichtbar ist. Um die Aufnahmevertiefung 25 herum verläuft der Schutzrand 30, der das Inlay 70 aufnehmen und schützen soll. Die Befestigungsmittelaufnahme 22 zeigt, wo die Befestigungsmittel 23 zur Verankerung des Cleatkörpers am Schuh 80 platziert werden. Eckpunkte des Cleatkörpers sind die vordere Rastnase 40 und die hintere Rastnase 50, die hier für die mechanische Verbindung zwischen dem Cleat 1 und dem Klickpedal 90 dienen. Das Cleat-Befestigungsteil 60 ist als der Bereich des Cleats 1 erkennbar, über den das Cleat 1 physikalisch am Schuh 80 befestigt wird.

In der Zusammenschau der Figuren ergibt sich die Offenbarung eines Cleat (1) für ein Klickpedalsystem, umfassend: einen Cleatkörper (10) mit einer unteren Oberfläche (20) zum Eingriff mit einem Klickpedal (90), und einer oberen Oberfläche (21) zur Befestigung an einem Schuh (80). Der Cleatkörper (10) weist ein Klick-Befestigungsmittel zur lösbaren Klick-Befestigung des Cleats (1) und des daran befestigten Schuhs (80) am Klickpedal (90), wobei ein eingeklickter Zustand vorliegt, wenn das Cleat (1) über das Klick-Befestigungsmittel mit dem Klickpedal (90) verrastet ist, und ein ausgeklickter Zustand vorliegt, wenn das Cleat (1) vom Klickpedal (90) gelöst ist. Weiter vorgesehen ist wenigstens ein Cleat-Befestigungsteil (60) mit wenigstens einer Befestigungsmittelaufnahme (22) zur Aufnahme von Befestigungsmitteln (23) zur Befestigung des Cleatkörpers (10) am Schuh (80). Der Cleatkörper (10) weist an seiner unteren Oberfläche (20) eine Aufnahmevertiefung (25) auf, in der ein separates Inlay (70) angeordnet ist, wobei das Inlay (70) eine Trägerstruktur (75) und eine darauf angeordnete elastische Schicht (77) aufweist, die Befestigungsmittelaufnahme (22) zumindest teilweise überdeckt, im bestimmungsgemäßen Betrieb sowohl im eingeklickten als auch im ausgeklickten Zustand lösbar am Cleatkörper (10) gehalten ist, und im ausgeklickten Zustand wenigstens teilweise eine Auftrittsfläche (74) zum Gehen bildet, wobei das Inlay (70) mittels eines Haltemechanismus (71) lösbar in der Aufnahmevertiefung (25) fixiert ist, der eine formschlüssige, kraftschlüssige und/oder magnetische Haltewirkung aufweist.

Fig. 4 zeigt eine isometrische Darstellung eines Inlays 70 eines erfindungsgemäßen Cleats 1, das u.a. in den Cleatkörper 10 gemäß Figs. 1 bis 3 eingesetzt werden kann. Gezeigt ist das Inlay 70, das in die untere Oberfläche 20, insbesondere in eine Aufnahmevertiefung 25, des Cleatkörpers eingefügt wird. Das Inlay 70 weist wenigstens teilweise eine Auftrittsfläche 74 auf, die beim Gehen mit einem Schuh 80 Kontakt mit dem Boden aufnimmt, um Traktion und/oder Dämpfung zu bieten. Es ist optional auch ein Lippen- oder Kantenmittel 72 zu erkennen, das zur Arretierung des Inlays 70 in der Aufnahmevertiefung 25 des Cleats 1 dient. Ein optionales Schraubmittel 73 erlaubt es, das Inlay 70 am Cleat 1 zu befestigen, insbesondere durch eine Schraubverbindung.

Das wenigstens teilweise elastische Inlay ist optional dadurch gekennzeichnet, dass es eine Trägerstruktur in Form einer Trägerplatte 75 aufweist, auf der eine elastische Schicht 77 bzw. Dämpfungsschicht 77 aufgebracht ist, wobei die elastische Schicht 77 insbesondere aus einem Material, das aus der Gruppe ausgewählt ist, die aus Gummi, Silikon und thermoplastischen Elastomeren besteht. Optional bildet die elastische Schicht 77 die Auftrittsfläche 74

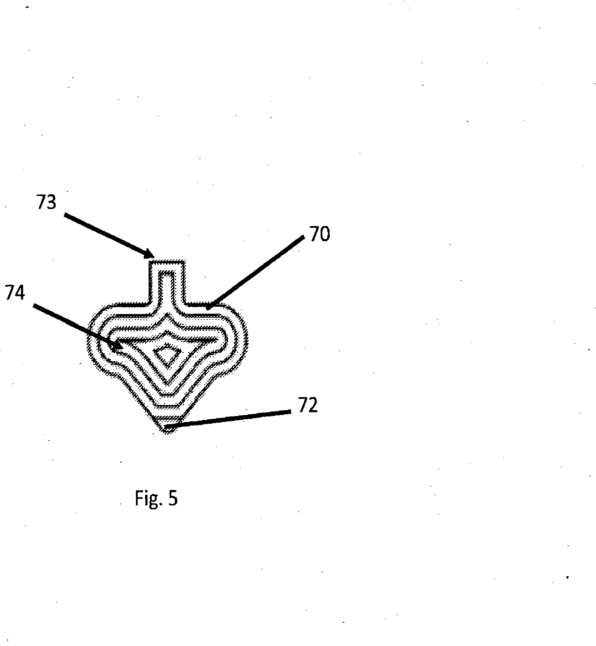

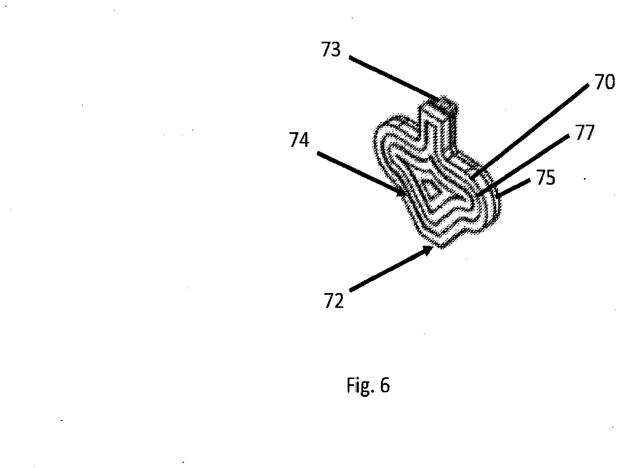

Fig. 5 und 6 zeigen eine Draufsicht auf das Inlay 70 gemäß Fig. 4. U.a. ist das Arretierungsgegenmittel insbes. Schraubenaufnahme 73 erkennbar, dass zur Befestigung des Inlays 70 im Cleatkörper 10 dient. Am umlaufenden Rand des Inlays 70 ist ein Kantenmittel 72 vorgesehen, das beim Einsetzen des Inlays 70 in den Cleatkörper 10 mit korrespondierenden Gegenmitteln zusammenwirken. Die Auftrittsfläche 74 bildet die oberste, nutzerseitige Schicht des Inlays 70 und bietet beim Gehen Traktion. Die Form des Inlays 70 folgt dem Umriss eines typischen Cleatkörpers 10 für ein Klickpedalsystem, das an der Sohle eines Fahrradschuhs befestigt wird.

Bei einer vergleichbaren Ausführungsform wird beispielsweise eine Madenschraube in den Cleatkörper eingeschraubt. Diese fixiert dann das Inlay. Optional sind aber auch andere Befestigungsmittel und Möglichkeiten zur Fixierung anwendbar, z.B. magnetische Fixierung, Fixierung durch Einclipsen, Fixierung durch Einschieben, beispielsweise per Nut und Feder-System und/oder mittels Hinterschneidungen, Verschraubungen oder jegliche andere aus dem Stand der Technik bekannte Systeme, um das Inlay am Cleat zu Befestigen. In einer alternativen Ausführungsform kann das Inlay beidseitig durch insbesondere Stiftschrauben gehalten sein, wobei optional vordere und hintere Rastnasen jeweils separat verschraubt werden. Bei einer weiteren Ausführung besteht das Inlay aus zwei Komponenten - einer harten Trägerstruktur und einer elastischen Außenschicht - wobei kleine Rastnasen das Inlay in der Aufnahmevertiefung halten. Die Entnahme kann dabei durch Heraushebeln erfolgen

Fig. 7 zeigt eine isometrische Darstellung einer Ausführungsform des erfindungsgemäßen Cleats 1 mit einem Cleatkörper 10 gemäß Fig. 1 und einem Inlay 70 gemäß Fig. 4

In der detaillierten Darstellung von Fig. 7 erkennt man den Cleat 1, der für das Klickpedalsystem verwendet wird. Der Cleatkörper 10 hat eine untere Oberfläche 20, die zum Eingriff mit dem Klickpedal 90 dient, und eine obere Oberfläche 21 zur Befestigung an einem Schuh 80. An den Cleatkörper 10 sind eine vordere Rastnase 40 und eine hintere Rastnase 50 als Klick-Befestigungsmittel zur lösbaren Befestigung an dem Klickpedal 90 erkennbar. Das wenigstens teilweise elastische Inlay 70 ist optional in einer Aufnahmevertiefung 25 an der unteren Oberfläche 20 des Cleatkörpers eingesetzt, wobei das Inlay 70 wenigstens teilweise eine Auftrittsfläche 74 für den Schuh 80 beim Gehen bildet.

Der Schutzrand 30 erstreckt sich wenigstens teilweise umlaufend um die Aufnahmevertiefung 25. Das Inlay 70 ist mit einem Kantenmittel versehen, welches dazu dient, das Inlay 70 in der Aufnahmevertiefung 25 zu halten. Es gibt auch einen Hinweis auf ein Arretierungsmittel 83, das mit dem Arretierungsgegenmittel 73 zusammenwirkt, um das Inlay 70 am Cleat 1 zu halten.

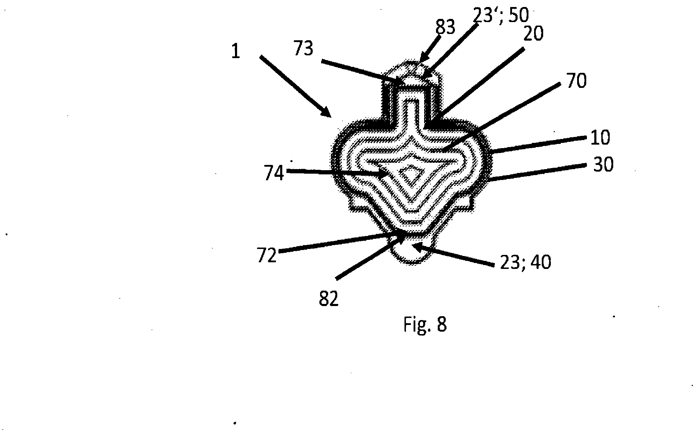

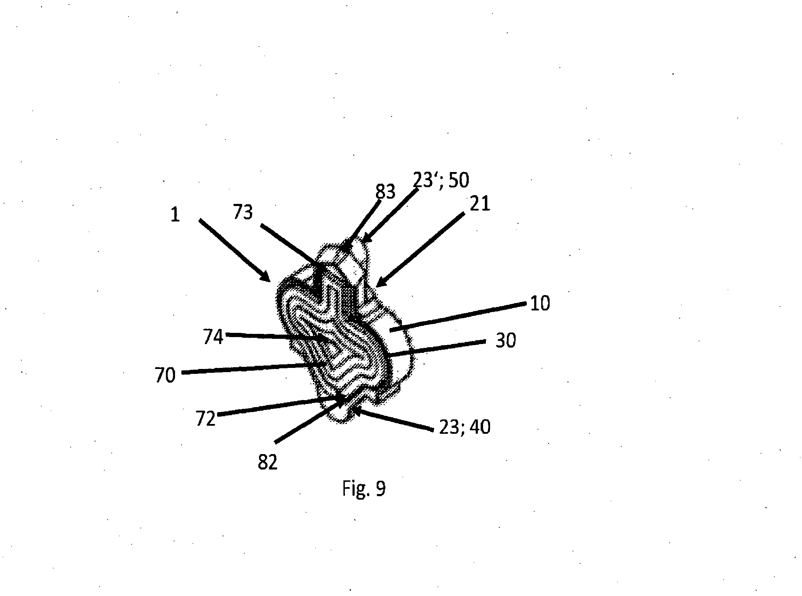

Figur 8 zeigt eine Draufsicht auf das Cleat 1 gemäß Fig. 7, und Fig. 9 eine weitere entsprechende Isometrie.

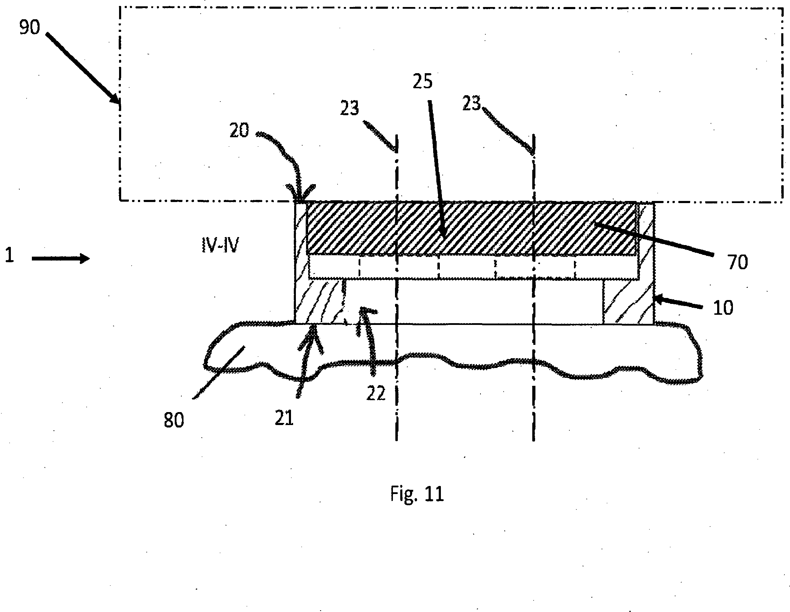

In den Figs. 10 und 11 sind die Schnittdarstellung eines Cleatkörpers (Fig. 10) bzw. Cleats 1 inkl. Inlay (Fig. 11) zu sehen.

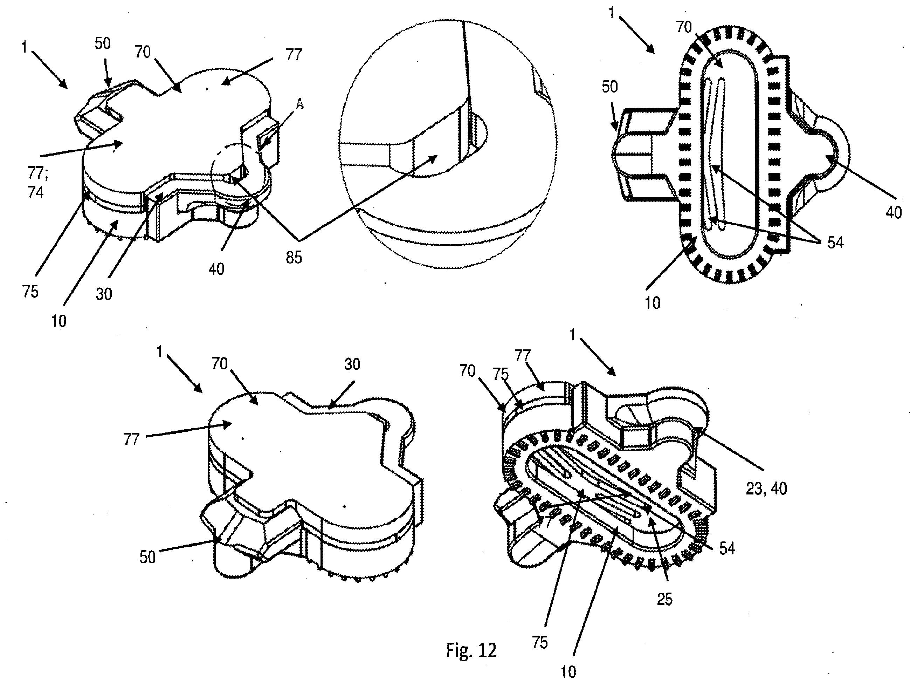

Die Figuren 12 bis 15 zeigen eine Ausführungsform eines erfindungsgemäßen Cleats 1 mit einem Haltemechanismus 71, der ein federelastisches Halteelement 52 umfasst.

Wie insbesondere in Fig. 12 ersichtlich ist, ist das Inlay 70 in einer Aufnahmevertiefung 25 des Cleatkörpers 10 angeordnet und weist eine Trägerstruktur 75 sowie eine darauf angeordnete elastische Schicht 77 auf, welche wenigstens teilweise die Auftrittsfläche 74 bildet. Ferner ist eine Werkzeugangriffsfläche 85 vorgesehen.

Das federelastische Halteelement 52 ist in der dargestellten Ausführungsform durch wenigstens einen in der Trägerstruktur 75 ausgebildeten Schlitz 54 gebildet. Durch diesen Schlitz 54 entstehen voneinander getrennte Bereiche 76 der Trägerstruktur, die relativ zueinander elastisch bewegbar sind.

In Zusammenschau der Figuren 12 bis 15 ist erkennbar, dass das Halteelement 52 mit wenigstens einer Nut 81 in der Aufnahmevertiefung 25 zusammenwirkt, sodass das Inlay 70 lösbar im Cleatkörper 10 gehalten ist. Dabei kann ein gegenüberliegendes Halteelement als starres Halteelement 53 ausgebildet sein.

Die durch den Schlitz 54 voneinander getrennten Bereiche 76 sind derart ausgebildet, dass sie beim Einführen des Halteelements 52 in die Nut 81 elastisch aufeinander zu bewegt werden und beim Lösen elastisch voneinander weg bewegt werden, wodurch ein wiederlösbares Einrasten ermöglicht ist.

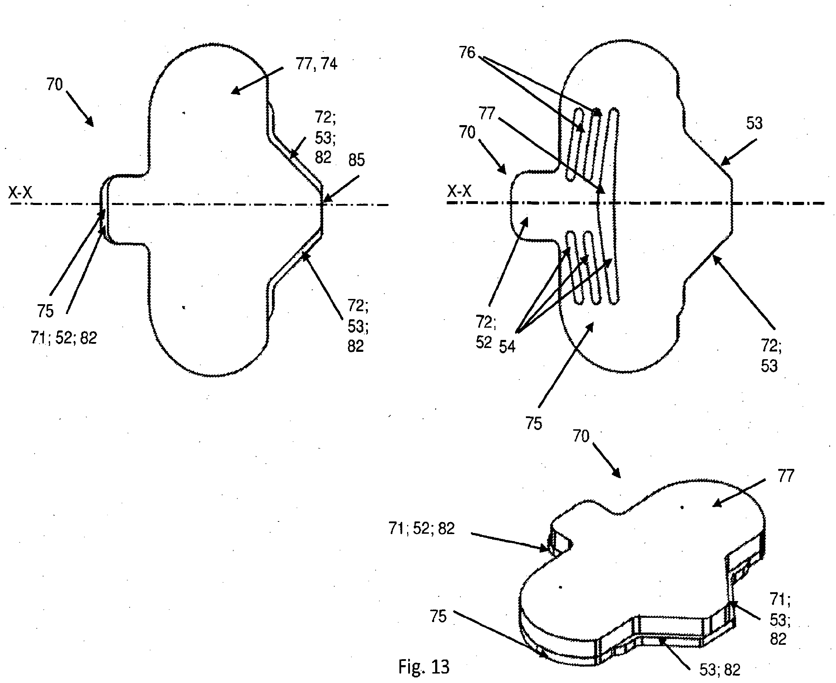

Fig. 13 zeigt das Inlay 70 in verschiedenen Ansichten, insbesondere in Draufsicht, Isometrie und Untersicht. Hierbei sind insbesondere die Schlitze 54, die Trägerstruktur 75, die elastische Schicht 77 sowie das Zusammenwirken von Halteelementen 52, 53 mit korrespondierenden Lippen- oder Kantenmitteln 72, 82 erkennbar.

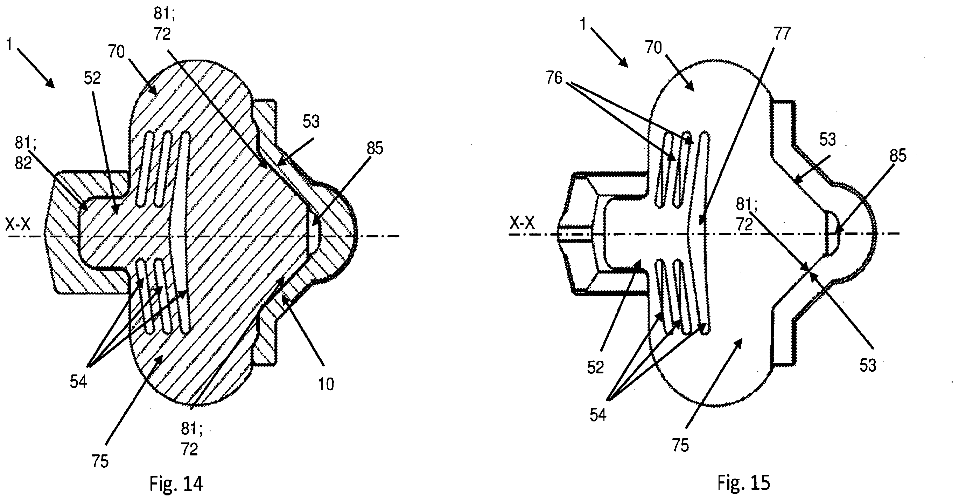

Fig. 14 zeigt einen Querschnitt durch das Cleat 1 mit eingesetztem Inlay 70, wobei die Anordnung des federelastischen Halteelements 52, des Schlitzes 54 sowie das Zusammenwirken mit der Nut 81 dargestellt ist. Fig. 15 zeigt eine Unteransicht dieser Ausführungsform.

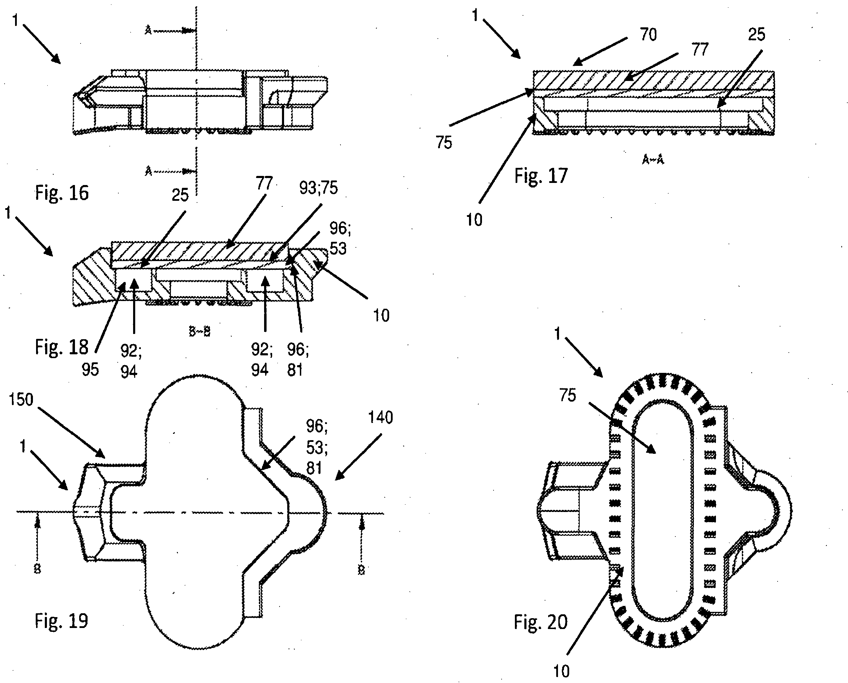

Die Figuren 16 bis 22 zeigen eine weitere Ausführungsform eines erfindungsgemäßen Cleats 1, bei der der Haltemechanismus 71 eine Magnetanordnung 92 umfasst.

Wie insbesondere aus den Figs. 16 bis 20 und 22 ersichtlich ist, sind in der Aufnahmevertiefung 25 des Cleatkörpers 10 wenigstens zwei Magnetanordnungen 92 vorgesehen, die jeweils wenigstens einen Magneten 94 umfassen. Diese sind insbesondere im vorderen Bereich 140 und im hinteren Bereich 150 des Cleats 1 angeordnet.

Die Magneten 94 können in Vertiefungen 95 des Cleatkörpers 10 aufgenommen sein. Sie wirken mit einem magnetischen Element 93 des Inlays 70 zusammen, das insbesondere Teil der Trägerstruktur 75 sein kann.

Durch diese magnetische Wechselwirkung wird das Inlay 70 lösbar in der Aufnahmevertiefung 25 gehalten. Darüber hinaus kann die Magnetanordnung 92 derart ausgelegt sein, dass das Inlay 70 selbsttätig in eine definierte Lage innerhalb der Aufnahmevertiefung 25 verschoben wird.

Hierzu können Führungsflächen 96 vorgesehen sein, die ein Verschieben des Inlays 70 in eine lagegesicherte und/oder klemmende Position bewirken.

Fig. 17 und Fig. 18 zeigen Schnittdarstellungen dieser Ausführungsform, aus denen die Anordnung der Magneten 94, der Vertiefungen 95 sowie die Position des Inlays 70 innerhalb der Aufnahmevertiefung 25 hervorgeht.

Fig. 19 zeigt eine Draufsicht und Fig. 20 eine Unteransicht des Cleats 1 mit Magnetanordnung 92.

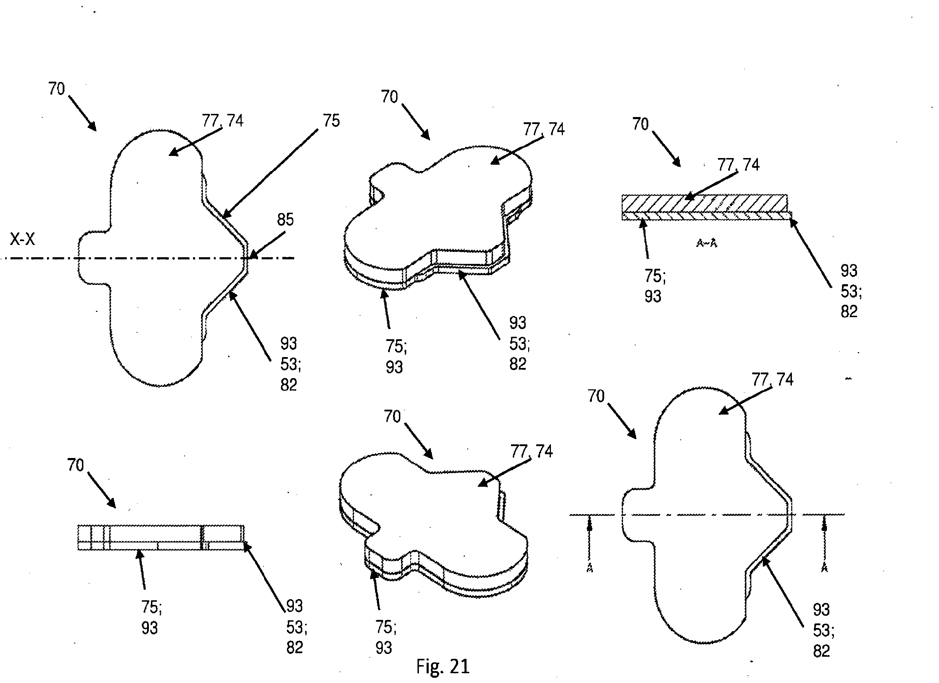

Fig. 21 zeigt mehrere Darstellungen des Inlays 70 dieser Ausführungsform, insbesondere Isometrien und Schnittdarstellungen, aus denen die Ausbildung der Trägerstruktur 75, der elastischen Schicht 77 sowie des magnetischen Elements 93 hervorgeht.

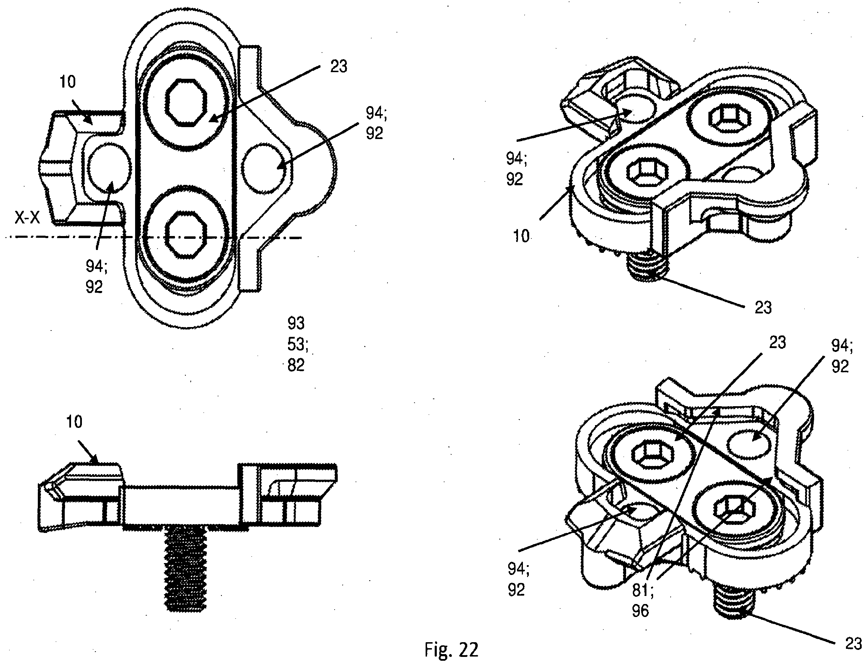

Fig. 22 zeigt mehrere Darstellungen des Cleatkörpers 10 dieser Ausführungsform, insbesondere Isometrien, aus denen die Ausbildung der Führungsflächen 96, die Lage und Einbindung der Magneten 94 der Magnetanordnung 92 und der Befestigungselemente 23, zum Befestigen des Cleat am Schuh, hervorgeht.

### Bezugszeichen

- 1: Cleat
- 10: Cleatkörper
- 20: untere Oberfläche
- 21: obere Oberfläche
- 22: Befestigungsmittelaufnahme
- 23: Befestigungsmittel
- 25: Aufnahmevertiefung
- 30: Schutzrand
- 40: vordere Rastnase
- 50: hintere Rastnase
- 52: federelastisches Halteelement
- 53: starres Halteelement
- 54: Schlitz
- 60: Cleat-Befestigungsteil
- 70: Inlay
- 71: Haltemechanismus
- 72: Lippen- oder Kantengegenmittel
- 73: Arretierungsgegenmittel insbes. Schraubenaufnahme
- 74: Auftrittsfläche
- 75: Trägerstruktur bzw. Trägerplatte
- 76: durch Schlitz voreinander getrennte Bereiche
- 77: elastische Schicht bzw. Dämpfungsschicht
- 80: Schuh
- 81: Nut
- 82: Lippen- oder Kantenmittel
- 83: Arretierungsmittel insbes. Schraubmittel
- 85: Werkzeugangriffsfläche
- 90: Klickpedal
- 92: Magnetanordnung
- 93: magnetisches Element
- 94: Magnet
- 95: Vertiefung
- 96: Führungsflächen
- 140: vorderer Bereich
- 150: hinterer Bereich
- X-X: Haupterstreckungsachse des Halteelementes

## Patentansprüche

1. Cleat (1) für ein Klickpedalsystem, umfassend:
einen Cleatkörper (10) mit
- einer unteren Oberfläche (20) zum Eingriff mit einem Klickpedal (90), und
- einer oberen Oberfläche (21) zur Befestigung an einem Schuh (80), wobei
der Cleatkörper (10) ein
- Klick-Befestigungsmittel zur lösbaren Klick-Befestigung des Cleats (1) und des daran befestigten Schuhs (80) am Klickpedal (90), wobei ein eingeklickter Zustand vorliegt, wenn das Cleat (1) über das Klick-Befestigungsmittel mit dem Klickpedal (90) verrastet ist, und ein ausgeklickter Zustand vorliegt, wenn das Cleat (1) vom Klickpedal (90) gelöst ist, sowie
- wenigstens ein Cleat-Befestigungsteil (60) mit wenigstens einer Befestigungsmittelaufnahme (22) zur Aufnahme von Befestigungsmitteln (23) zur Befestigung des Cleatkörpers (10) am Schuh (80) aufweist,
**dadurch gekennzeichnet, dass**
der Cleatkörper (10) an seiner unteren Oberfläche (20) eine Aufnahmevertiefung (25) aufweist, in der ein separates Inlay (70) angeordnet ist,
wobei das Inlay (70)
- eine Trägerstruktur (75) und eine darauf angeordnete elastische Schicht (77) aufweist,
- die Befestigungsmittelaufnahme (22) zumindest teilweise überdeckt,
- im bestimmungsgemäßen Betrieb sowohl im eingeklickten als auch im ausgeklickten Zustand lösbar am Cleatkörper (10) gehalten ist, und
- im ausgeklickten Zustand wenigstens teilweise eine Auftrittsfläche (74) zum Gehen bildet, wobei das Inlay (70) mittels eines Haltemechanismus (71) lösbar in der Aufnahmevertiefung (25) fixiert ist, der eine formschlüssige, kraftschlüssige und/oder magnetische Haltewirkung aufweist.

2. Cleat (1) nach Anspruch 1, wobei die Aufnahmevertiefung (25) einen wenigstens teilweise umlaufenden Schutzrand (30) aufweist, wobei optional die durch die elastische Schicht des Inlays (70) gebildete Auftrittsfläche (74) des in die Aufnahmevertiefung (25) eingesetzten Inlays (70) sich im wesentlichen oberflächenbündig mit diesem Schutzrand (30) erstreckt, optional maximal 3 mm unterhalb dieses Schutzrandes (30) und/oder
maximal 6 mm, weiter optional maximal 3mm oberhalb dieses Schutzrandes (30) erstreckt, wobei optional der Schutzrand (30) wenigstens abschnittsweise entlang des Außenumfanges des Cleats (1) verläuft.

3. Cleat (1) nach einem der vorhergehenden Ansprüche, **dadurch gekennzeichnet, dass** die Trägerstruktur (75) eine Trägerplatte (75) aufweist, auf der die elastische Schicht (77) aufgebracht ist, wobei die elastische Schicht insbesondere aus einem Material, das aus der Gruppe ausgewählt ist, die aus Gummi, Kautschuk, TPU, Silikon und thermoplastischen Elastomeren besteht und weiter optional, die elastische Schicht eine Texturierung auf ihrer vom Cleat (1) weg weisenden, die Auftrittsfläche (74) bildenden Oberfläche aufweist, um Traktion insbesondere beim Gehen zu erhöhen.

4. Cleat (1) nach einem der vorhergehenden Ansprüche, **dadurch gekennzeichnet, dass** das Inlay (70) im eingesetzten Zustand wenigstens 70%, weiter optional wenigstens 80%, und weiter optional wenigstens 90% der unteren Oberfläche (20) des Cleatkörpers bedeckt, weiter optional im Wesentlichen die gesamte untere Oberfläche (20) bedeckt, mit Ausnahme eines die Aufnahmevertiefung (25) wenigstens teilweise umlaufenden Schutzrandes (30) und/oder des Klick-Befestigungsmittels,
weiter optional maximal 95%, weiter optional maximal 85% der unteren Oberfläche (20) des Cleatkörpers bedeckt.

5. Cleat (1) nach einem der vorhergehenden Ansprüche, **dadurch gekennzeichnet, dass** das Inlay (70) austauschbar am Cleat (1) angeordnet ist, wobei der Haltemechanismus (71) ein Lippen- oder Kantenmittel (82) in der Aufnahmevertiefung (25) und ein komplementäres Lippen- oder Kantengegenmittel (72) am Inlay (70) beinhaltet, oder umgekehrt, wobei das Lippen- oder Kantenmittel (82) mit dem Lippen- oder Kantengegenmittel (72) zusammenwirkt, um das Inlay (70) in der Aufnahmevertiefung (25) zu halten.

6. Cleat (1) nach einem der vorhergehenden Ansprüche, insbesondere Anspruch 5, **dadurch gekennzeichnet, dass**
das Lippen- oder Kantengegenmittel (72) wenigstens ein federelastisches Halteelement (52) aufweist, das mit wenigstens einem Lippen- oder Kantenmittel (82) in Form wenigstens einer Nut (81) zusammenwirkt und lösbar in diese Nut (81) eingreift, um das Inlay (70) lösbar in der Aufnahmevertiefung (25) zu halten.

7. Cleat (1) nach einem der vorhergehenden Ansprüche, insbesondere Anspruch 5 oder 6, **dadurch gekennzeichnet, dass**
gegenüberliegende Nuten (81), optional im vorderen und hinteren Bereich der Aufnahmevertiefung (25) vorgesehen sind, wobei wenigstens ein Halteelement als ein starres Halteelement (53) und wenigstens ein gegenüberliegendes Halteelement als ein federelastisches Halteelement (52) ausgebildet ist, die in diese Nuten lösbar eingreifen.

8. Cleat (1) nach einem der vorhergehenden Ansprüche, insbesondere einem der Ansprüche 5 - 7, **dadurch gekennzeichnet, dass**
das federelastische Halteelement (52) durch wenigstens einen in der Trägerstruktur (75) des Inlays (70) ausgebildeten Schlitz (54) gebildet ist,
wobei der Schlitz (54) eine elastische Verformung des Halteelements (52), insbesondere ein elastisches Verschieben in der Ebene der Trägerstruktur (75), optional entlang der Haupterstreckungsachse X-X des Halteelements (52), ermöglicht,
wobei die durch den Schlitz (54) voneinander getrennten Bereiche (76) der Trägerstruktur derart elastisch ausgebildet sind, dass sie
• beim Einführen des federelastischen Halteelements (52) in die Nut (81) elastisch aufeinander zu bewegt werden, und
• beim Lösen des federelastischen Halteelements (52) aus der Nut (81) elastisch voneinander weg bewegt werden,
so dass das federelastische Halteelement (52) durch diese elastische Relativbewegung in die Nut (81) einrastbar und daraus lösbar ist.

9. Cleat (1) nach einem der vorhergehenden Ansprüche, insbesondere einem der Ansprüche 5 - 8, **dadurch gekennzeichnet, dass**
mehrere Schlitze (54) vorgesehen sind, die sich im Wesentlichen parallel zueinander und optional im Wesentlichen parallel zur Haupterstreckungsachse X-X des Halteelements (52) erstrecken, wobei optional die Schlitze (54) symmetrisch oder asymmetrisch zur Haupterstreckungsachse X-X des Halteelements (52) angeordnet sind, und wobei weiter optional sich die Schlitze (54) in Form eines Fischgrätmusters entlang der Haupterstreckungsachse X-X angeordnet sind und sich von dieser weg erstrecken.

10. Cleat (1) nach einem der vorhergehenden Ansprüche, insbesondere einem der Ansprüche 5 - 9, **dadurch gekennzeichnet, dass**
die Trägerstruktur einstückig ausgebildet ist und der wenigstens eine Schlitz (54) integral darin ausgebildet ist.

11. Cleat (1) nach einem der vorhergehenden Ansprüche, insbesondere einem der Ansprüche 5 - 10, **dadurch gekennzeichnet, dass**
die elastische Schicht des Inlays (70) derart nachgiebig ausgebildet ist, dass sie eine elastische Verformung des Halteelements (52) beim Einsetzen und/oder Entnehmen des Inlays (70) zulässt.

12. Cleat (1) nach einem der vorhergehenden Ansprüche, insbesondere einem der Ansprüche 5 - 11, **dadurch gekennzeichnet, dass** eine Werkzeugangriffsfläche (85) vorgesehen ist, mittels der das Inlay (70) durch elastische Verformung, optional durch ein elastisches Verschieben des federelastischen Halteelementes (52) in der Haupterstreckungsebene der Trägerstruktur (75), optional entlang Haupterstreckungsachse X-X des federelastischen Halteelements (52), in der Aufnahmevertiefung (25) verriegelbar und/oder entriegelbar ist, optional, dass die Werkzeugangriffsfläche derart ausgebildet ist, dass das federelastische Halteelement mittels eines Hebelwerkzeuges in eine Nut (81) in der Aufnahmevertiefung (25) einrastbar und/oder ausrastbar ist, wobei optional die Werkzeugangriffsfläche von zwei Seiten durch jeweils ein federelastisches Halteelement (52) oder starres Haltelement, die optional symmetrisch zur Haupterstreckungsachse X-X des federelastischen Halteelementes (52) angeordnet sind, eingerahmt ist.

13. Cleat (1) nach einem der vorhergehenden Ansprüche, **dadurch gekennzeichnet, dass** der Cleatkörper (10) wenigstens eine Magnetanordnung (92) umfasst, die in der Aufnahmevertiefung (25) angeordnet ist, mit wenigstens einem Magneten (94), der mit einem magnetischen Element (93), optional einer magnetischen Trägerstruktur (75) des Inlays (70) zusammenwirkt, wobei optional wenigstens zwei Magnetanordnungen, je wenigstens eine im vorderen (140) und hinteren Bereich (150) angeordnet sind, wobei optional wenigstens ein Magnet in einer Vertiefung (95) des Cleatkörpers (10) unlösbar angeordnet ist.

14. Cleat (1) nach einem der vorhergehenden Ansprüche, **dadurch gekennzeichnet, dass** die Magnetanordnung (92) derart ausgelegt ist, dass das Inlay (70) selbsttätig in eine definierte Lage innerhalb der Aufnahmevertiefung (25) verschoben wird, wobei optional die Aufnahmevertiefung (25) und/oder das Inlay (70) Führungsflächen (96), die optional ein starres Haltelement (53) bilden, aufweisen, die das Inlay beim Verschieben in eine klemmende Position bewegen.

15. Klickpedalsystem, mit einem Cleat (1) nach einem der vorhergehenden Ansprüche und mit einem Klickpedal (90) zur Klick-Befestigung dieses Cleats.
